# EUROPÄISCHE PATENTSCHRIFT

(11) **EP 3 482 160 B1**
(45) Veröffentlichungstag und Bekanntmachung des Hinweises auf die Patenterteilung: **13.05.2020**
(21) Anmeldenummer: 17727214.3
(22) Anmeldetag: 02.06.2017
(51) Int. Cl.: G01C 21/32, B60W 30/18

(54) **VERFAHREN UND SYSTEM ZUR ERZEUGUNG VON KARTENINFORMATIONEN FÜR NOTFALLFLÄCHEN**
METHOD AND SYSTEM FOR GENERATING MAP INFORMATION FOR EMERGENGY AREAS
PROCÉDÉ ET SYSTÈME POUR GÉNÉRER DES INFORMATIONS DE CARTES POUR DES SURFACES D'URGENCES

(30) Priorität: 11.07.2016 DE 102016212587
(43) Veröffentlichungstag der Anmeldung: 15.05.2019
(73) Patentinhaber: Continental Automotive GmbH, 30165 Hannover (DE)
(72) Erfinder: KRISTENSEN, Steen, 88161 Lindenberg im Allgäu (DE); HAMER, Henning, 81543 München (DE); GREWE, Ralph, 65933 Frankfurt am Main (DE)
(86) Internationale Anmeldenummer: PCT/EP2017/063416
(87) Internationale Veröffentlichungsnummer: WO 2018/010891

(56) Entgegenhaltungen:
- EP-A2- 1 150 100
- WO-A1-2012/019628

## Beschreibung

### Gebiet der Technik

Das vorliegende Verfahren bzw. System bezieht sich auf die Erzeugung von Karteninformationen, beispielsweise zur Verwendung in Navigationssystemen, eHorizon-Systemen, Fahrerunterstützungssystemen, oder allgemein als Basis für autonomes oder hoch automatisiertes Fahren.

eHorizon-Systeme integrieren digitale topografische Kartendaten mit Sensordaten, etwa eines GPS Empfängers, zur vorausschauenden Steuerung von Fahrzeugsystemen. Künftige Ereignisse, z.B. die Steigung hinter der nächsten Kurve, werden frühzeitig für die Anpassung der Steuerung des Fahrzeugs genutzt. eHorizon-Systeme interpretieren dabei Karten- und Sensordaten und passen bspw. das Motor- und Getriebemanagement automatisch an.

### Stand der Technik

Einige heutige Systeme für hoch automatisiertes oder autonomes Fahren verwenden digitale Straßenkarten oder 3D-CAD Modelle von Straßen, also digitale Darstellungen von Straßen, die neben dem in eine Fläche projizierten Straßenverlauf auch Höheninformationen und ggf. Informationen zu Objekten oberhalb der Straßenoberfläche beinhalten, welche Informationen über sehr viele Merkmale einer Straße oder einer Fahrbahn bzw. Fahrspur einer Straße enthalten und eine sehr hohe Detailauflösung bieten. Die Straßenkarten oder 3D-CAD Modelle können als Polygonzüge zwischen Knotenpunkten, aber auch in anderen Formaten vorliegen. Details umfassen, neben einer allgemeinen Geo-Position, einer Breite, einer Spurgeometrie sowie einer Zahl von Fahrspuren für jede Richtung an jedem Ort der Straße, bestimmte weitere, über die Zeit nur langsam oder nicht veränderliche Merkmale der Straße. Diese Merkmale umfassen beispielsweise Fahrbahnmarkierungen, seitlich der Straße befindliche Objekte, z.B. Begrenzungspfähle, Verkehrszeichen oder Laternenpfähle, aber auch Einmündungen von Straßen oder Einfahrten, und dergleichen. Die Details der Straße bzw. der Fahrbahn oder Fahrspur, oder jeweilige Referenzpunkte davon, sind mit exakten Geo-Positionen in der Karte verknüpft und werden beim hoch automatisierten oder autonomen Fahren laufend erfasst und zur Spurführung und/oder Positionsbestimmung während der Fahrt verwendet.

In WO 2012/019628 A1 ist ein Verfahren zum Ermitteln von Parkflächen, die in eine digitale Karte eingefügt werden, angegeben. In EP 1 150 100 A2 ist ein Navigationsgerät beschrieben, das eine Navigation innerhalb eines Gebäudes, beispielsweise innerhalb eines Parkhauses oder einer Tiefgarage, entsprechend der inneren Struktur des Gebäudes ermöglicht.

### Zusammenfassung der Erfindung

Hoch automatisiert oder autonom fahrende Fahrzeuge müssen in der Lage sein, so wie ein menschlicher Fahrer auch, das Fahrzeug bei unvorhergesehenen Ereignissen und/oder Fehlfunktionen in eine sichere Lage zu bringen, also beispielsweise an einem sicheren Ort zum Stillstand zu bringen. Diese Funktion wird auch als Minimal-Risiko-Manöver, engl. Minimal Risk Manoeuvre, oder MRM bezeichnet. Ein menschlicher Fahrer muss bei Bedarf innerhalb kürzester Zeit alle geeigneten Orte erfassen, einen davon auswählen, und das Fahrzeug so steuern, dass der Ort sicher erreicht werden kann.

Bei einer Fahrt auf einer mehrspurigen Autobahn ist ein solcher sicherer Ort z.B. der Standstreifen oder ein Rastplatz. Diese sicheren Orte sind auch in vielen üblichen digitalen Straßenkarten verzeichnet. Auf Streckenabschnitten ohne Standstreifen, etwa in Baustellen, kann eine Nothaltebucht als sicherer Ort gelten. Diese sind, insbesondere in nur vorübergehend errichteten Baustellen, in der Regel nicht in den üblichen digitalen Straßenkarten verzeichnet. Entlang anderer Straßen befinden sich geeignete sichere Orte oft außerhalb der eigentlichen Straße, als in Bereichen, die bei der Erstellung der digitalen Straßenkarte ignoriert oder überhaupt nicht erfasst werden. Beispielsweise können Grünstreifen, neben der Straße liegende Wiesen oder Äcker, Einfahrten in private Grundstücke, aber auch entlang der Straße verlaufende Flächen von Parkplätzen je nach Situation als sicherer Ort geeignet sein. Die derzeit verfügbaren digitalen Karten bilden solche Orte nicht so genau und zeitlich aktuell ab, als dass sie für die Belange des hoch automatisierten oder autonomen Fahrens verwendet werden können. Derzeit verfügbare Sensorsysteme können diese Orte nicht mit ausreichender Genauigkeit in Echtzeit erfassen und einem Fahrmanöver zugrunde legen.

Die Erfindung bezieht sich auf ein System zur Erzeugung von Karteninformationen. Das System kann ein Computerprogramm umfassen, welches ein entsprechendes Verfahren zur Erzeugung von Karteninformationen ausführt, und welches auf einem Datenträger gespeichert sein kann. Die Erfindung bezieht sich außerdem auf ein Fahrzeug mit einem solchen System.

Das erfindungsgemäße System zur Erzeugung von Karteninformationen für einen oder mehrere Straßenabschnitte einer digitalen Straßenkarte ist im Patentanspruch 1 angegeben. Weiterbildungen des Systems sind in den Unteransprüchen 2 und 3 angegeben. Ein erfindungsgemäßes Verfahren zur Erzeugung von Karteninformationen für einen oder mehrere Straßenabschnitte einer digitalen Straßenkarte ist im Patentanspruch 4 angegeben. Weiterbildungen des Verfahrens sind in den Unteransprüchen 5 bis 7 angegeben. Im Patentanspruch 8 ist ein Computerprogrammprodukt zur Erzeugung von Karteninformationen für einen oder mehrere Straßenabschnitte einer digitalen Straßenkarte angegeben.

Eine oder mehrere Schnittstellen können eine oder mehrere digitale Datenschnittstellen mit Sendern und/oder Empfängern umfassen, welche zu einem oder mehreren Telekommunikationsstandards kompatibel ausgebildet sind und mit anderen Komponenten des Systems kommunikativ verbunden sind.

Das System kann auch als aus einem oder mehreren Funktionsblöcken im Sinne einer Funktions-Modul-Architektur gebildet aufgefasst werden. Dabei repräsentieren jeweilige Funktionsblöcke Mittel zur Ausführung entsprechender Funktionen. Die Mittel können auch durch ein oder mehrere, durch ein Computerprogramm zur Durchführung entsprechender Funktionen eingerichtete Computer oder Datenverarbeitungseinheiten implementiert sein. Die ein oder mehreren Computer oder Verarbeitungseinheiten können ein oder mehrere Mikroprozessoren umfassen, welche mit Arbeitsspeicher und/oder nicht-flüchtigen Speichermitteln sowie anderen Systemkomponenten über ein oder mehrere Datenbusse kommunikativ verbunden sind, die vor und/oder während der Ausführung von Computerprogramminstruktionen Daten empfangen und/oder senden, wodurch die Computer oder Verarbeitungseinheiten zumindest Teile des Verfahrens ausführen. Die nicht-flüchtigen Speichermittel umfassen unterschiedliche Speichermedien, z.B. optische oder magnetische Speicher, Phase-Change- oder Flash-Speicher. Mehrere Module oder Funktionsblöcke können in einem Computer oder einer Datenverarbeitungseinheit implementiert sein.

Zumindest Teile des Systems können in einem Steuergerät eines Kraftfahrzeugs angeordnet sein. Das Steuergerät kann einen Mikroprozessor enthalten, der über einen oder mehrere Datenbusse kommunikativ mit Speichermitteln verbunden ist. Der Mikroprozessor ist dazu eingerichtet, in den Speichermitteln gespeicherte Computerprogramminstruktionen auszuführen, und Daten über den einen oder die mehreren Datenbusse zu senden und/oder zu empfangen. Die Speichermittel können Arbeitsspeicher und nichtflüchtigem Speicher umfassen. Nicht-flüchtiger Speicher umfasst z.B. optische, magnetische, Phase-Change- oder Flash-Speicher. Der eine oder die mehreren Datenbusse kann dazu eingerichtet sein, Steuerbefehle und/oder Daten unterschiedlicher Steuergeräte, Sensoren und/oder Aktuatoren uni- oder bidirektional zu übertragen. Dazu notwendige Verfahren können durch den Mikroprozessor bei der Ausführung der Computerprogramminstruktionen implementiert sein.

Die Computerprogramminstruktionen können in die Speichermittel unter Verwendung drahtlos oder mittels Kabeln oder Leitungen verbundener Schnittstellen übertragen werden. Die Computerprogramminstruktionen liegen außerhalb des Systems als Computerprogrammprodukt vor, welches dauerhaft auf einem computerlesbaren Medium oder maschinenlesbaren Medium gespeichert ist, und welches als auf einem Trägermedium gespeichertes Computerprogramm aufgefasst werden kann.

Das Computerprogrammprodukt kann auch in einer nicht dauerhaften, vorübergehenden Form vorliegen, z.B. als ein elektromagnetisches oder optisches Signal, welches die Computerprogramminstruktionen durch seine Modulation vorübergehend repräsentiert. Durch die Modulation werden dem Signal mithin die Computerprogramminstruktionen vorübergehend auslesbar aufgeprägt, bspw. während der Übertragung der Computerprogramminstruktionen von einem Datenträger in das System. In diesem Fall stellt das Signal, z.B. repräsentiert durch einen modulierten Träger, eine konkrete Verkörperung des Computerprogrammprodukts dar, von der es entnommen oder abgegriffen werden kann.

Als unmittelbarer Straßenraum werden im Kontext dieser Beschreibung die von Fahrzeugen im Rahmen jeweils geltender Verkehrsregeln im nicht-ruhenden Verkehr befahrbare Flächen einer Straße oder eines Verkehrsweges bezeichnet, also insbesondere Fahrspuren einer Straße, Kreuzungsbereiche, und dergleichen. Den unmittelbaren Straßenraum beschreibende Daten können auch Informationen enthalten, die über die Oberfläche des Straßenraums hinausgehen, also Informationen über eine Höhenbegrenzung, oder eine Höhe von Objekten, die sich im Straßenraum befinden. Gleiches gilt für Daten, die Flächen außerhalb des unmittelbaren Straßenraums beschreiben.

Die Datensätze können mittels einer Kamera oder einer anderen geeigneten Vorrichtung eines eine Straße befahrenden Fahrzeugs aufgenommene Bilder des Straßenraums und insbesondere der Flächen außerhalb des unmittelbaren Straßenraums umfassen. Andere geeignete Vorrichtungen umfassen beispielsweise Radar-, Lidar- oder Ultraschall-Systeme, aus deren Signalen mittels einer entsprechenden, auf einem Computersystem laufenden Software Bilder zusammengesetzt werden. Der Begriff Bilder wird hierbei nicht ausschließlich im konkreten Sinn verwendet, sondern schließt andere geeignete Darstellungen einer von jeweiligen Vorrichtungen abgetasteten Umgebung ein, bspw. Disparitätskarten, Lidar- oder Radar-Peaklisten, aber auch bereits teilweise bearbeitete bzw. analysierte Bilder. Ein teilweise bearbeitetes bzw. analysiertes Bild ist bspw. ein Bild, dem Vektorinformationen hinzugefügt wurden, welche Kanten von Objekten oder von Straßenmarkierungen entsprechen. Je nach dem Grad der Bearbeitung bzw. Analyse kann das zugrunde liegende Bild dann bspw. stärker komprimiert oder in einer geringeren Auflösung mit übertragen werden. Wenn eine weiter gehende Analyse bereits im Fahrzeug erfolgt kann es genügen, eine abstrakte Repräsentation einer Fläche an die erste Datenverarbeitungseinheit zu übermitteln, bspw. einen Polygonzug, der eine Fläche repräsentiert, oder ein entsprechendes Gitterraster. Der Grad der Bearbeitung im Fahrzeug kann dabei davon abhängen, in welchem Maße die Bilder unmittelbar in dem Fahrzeug ausgewertet werden, etwa für Zwecke des autonomen oder hoch automatisierten Fahrens.

Die Datensätze werden von einer Vielzahl von Fahrzeugen erzeugt, während sie entsprechende Straßenabschnitte befahren. Die Datensätze können dabei auch Informationen über einen Raum oberhalb der Flächen außerhalb des unmittelbaren Straßenraums umfassen, insbesondere über eine freie Durchfahrtshöhe. Außerdem können, wenn eine zumindest teilweise Analyse bereits in dem Fahrzeug erfolgt, die Datensätze Informationen enthalten, anhand derer die Flächen kategorisiert werden können.

Eine Kategorisierung kann beispielsweise nach einer Eignung der Fläche für das Befahren mit Fahrzeugen unterschiedlicher Typen erfolgen. Typen von Fahrzeugen umfassen bspw. PKW, LKW, sogenannte Sports Utility Vehicle (SUV) . Eine Typisierung kann aber anhand einer Bodenfreiheit, einer Fahrzeughöhe, einer Fahrzeugbreite oder -länge, einem Wendekreisradius, einem Fahrzeuggewicht, einer Zahl angetriebener und/oder nicht angetriebener Achsen, einer Anwesenheit eines Anhängers, etc., erfolgen. Die Eignung kann bspw. von der Beschaffenheit der Oberfläche abhängen. So ist eine geteerte, glatte Fläche mit hoher Wahrscheinlichkeit für viele Fahrzeugtypen zu befahren, während eine mit lockerem Kies oder Sand bedeckte Fläche mit einer höheren Wahrscheinlichkeit eine geringe Tragfähigkeit aufweist und daher für schwere Fahrzeuge weniger geeignet sein kann. Andere Oberflächen, wie z.B. Gras oder bestimmte Pflasterarten können zudem eine witterungsabhängige Eignung aufweisen. So ist z.B. eine Grasoberfläche bei Regen rutschiger und möglicherweise weicher als bei trockenem Wetter. Auch die Ebenheit der Fläche kann für die Kategorisierung verwendet werden. Eine stark unebene Fläche kann für Fahrzeuge mit einer größeren Bodenfreiheit noch zu befahren sein, während sie für Fahrzeuge mit einer geringeren Bodenfreiheit nicht mehr befahrbar ist. Eine Kategorisierung kann auch nach einer Ladungsart erfolgen. So kann ein Verlassen der Fahrbahn, um einen sicheren Ort zu erreichen, in einem Wasserschutzgebiet für Fahrzeuge mit wassergefährdender Ladung nicht angezeigt sein, während Fahrzeuge mit anderer Ladung oder ohne Ladung an dieser Stelle nicht eingeschränkt sind. Diese und ähnliche Kategorisierungen können bspw. durch eine Erkennung von entsprechenden Verkehrszeichen, die in der Nähe der Flächen aufgestellt sind, erfolgen.

Die Kategorisierung kann dazu dienen, einem Fahrzeug, welches ein Minimal Risk Manoeuvre ausführen muss, zu ermöglichen, unter einer Vielzahl mehrerer verfügbarer Flächen unterschiedlicher Eignung oder Kategorisierung die in einer vorliegenden Situation am besten geeignete Fläche zu wählen. So kann eine Priorisierung von befestigten Flächen vor unbefestigten Flächen erfolgen, aber auch eine Abstufung innerhalb unbefestigten Flächen, z.B. Schotter vor Sand, Sand vor Gras. Andererseits kann, je nach Gefährlichkeit einer Situation, eine näher liegende Grasfläche einer weiter entfernt liegenden Asphaltfläche vorgezogen werden.

Die empfangenen Datensätze werden ausgewertet, um Flächen außerhalb des unmittelbaren Straßenraums zu identifizieren, welche durch ein Fahrzeug nach dem Verlassen einer Straße befahren werden können, bspw. um das Fahrzeug dort zum Stillstand zu bringen. Dabei können für einzelne Flächen die in den Datensätzen enthaltenen, für eine Kategorisierung geeigneten Informationen entsprechend berücksichtigt werden. Eine Kategorisierung kann jedoch auch erst durch die Auswertung in der ersten Datenverarbeitungseinheit erfolgen, z.B. durch Bildanalyseverfahren und Vergleichen von die Oberfläche darstellenden Bildinhalten mit Referenzmustern oder Referenztexturen, die charakteristisch für bestimmte Oberflächen sind. Mittels Stereokameras, Radar oder Lidar aufgenommene Bilder können zur Ermittlung eines Höhenprofilverlaufs oder einer Welligkeit der Oberfläche dienen. Monokameras können ebenfalls verwendet werden, wenn zwischen aufeinanderfolgenden Bildern ein Versatz des Aufnahmeorts vorliegt, wobei zumindest einige Bildbereiche überlappen. Mittels Lidar oder Radarsensoren erfasste Flächen können trotz vorhandenem Bewuchs mit Gräsern oder anderen weichen Pflanzen als geeignet eingestuft werden. Als Ergebnis der Auswertung stehen Informationen über geographische Orte der Flächen, ihre Größe, ihre Oberflächenbeschaffenheit und dergleichen zur Verfügung, die digitalen Straßenkarten in einem geeigneten Format hinzugefügt werden können. Die Informationen werden abrufbar in einem oder mehreren für digitale Straßenkarten, Navigationssysteme, ADAS-Systeme und/oder eHorizon-Systeme geeigneten Format bereitgestellt. Zur Vereinfachung wird in dieser Beschreibung für die unterschiedlichen Formate der unterschiedlichen Systeme stellvertretend der Begriff digitale Straßenkarte verwendet. Abrufbares Bereitstellen umfasst hierbei neben der Übertragung in Reaktion auf eine entsprechende Anfrage eines Systems, welches die Daten verwendet (Pull-Übertragung), auch ein durch die erste Datenverarbeitungseinheit ausgelöstes Übertragen der Informationen ohne vorhergehende spezifische Anfrage (Push-Datenübertragung).

Grundsätzlich ist es möglich, die Erkennung von potentiellen Notfallflächen vollständig in einem Fahrzeug oder ausschließlich in einer Datenverarbeitungseinheit durchzuführen. Eine Kombination aus beidem ist ebenfalls möglich. Dabei können im Fahrzeug oder in der Datenverarbeitungseinheit Verfahren angewendet werden, die auf einer Sequenz von zeitlich aufeinanderfolgenden Einzelmessungen bzw. Einzelerfassungen desselben Fahrzeugs basieren. Bei der Auswertung in der Datenverarbeitungseinheit können darüber hinaus auch zeitlich koinzidierende oder auseinander liegende Messungen oder Erfassungen einer Vielzahl unterschiedlicher Fahrzeuge berücksichtigt werden.

Je nach einem jeweils für eine digitale Straßenkarte geeigneten Format können Flächen außerhalb des unmittelbaren Straßenraums in ähnlicher Weise wie Fahrstreifen dargestellt werden. Es ist aber auch möglich, die Flächen durch eine umschließende Kurve, bspw. als Polygonzug, als Spline oder als Rastergitter darzustellen.

Gemäß einem Aspekt des Verfahrens werden für jeweilige Flächen Bereiche von Geschwindigkeiten und/oder Trajektorien ermittelt, für die bzw. unter Einhaltung derer ein Befahren der Fläche möglich ist. Entsprechende Informationen werden der digitalen Straßenkarte bzw. den eHorizon-Daten hinzugefügt. Dieser Aspekt kann eine Auswahl einer geeigneten Fläche für ein Fahrzeug beeinflussen, bspw. wenn eine maximale Geschwindigkeit zum Befahren einer nächstliegenden Fläche ausgehend von der derzeitigen Geschwindigkeit und Geo-Position nicht mehr sicher durch ein Bremsmanöver erreicht werden kann, oder eine Trajektorienbereich für das Befahren der Fläche einen Kurvenradius erfordert, den das Fahrzeug nicht einhalten kann. In einem solchen Fall könnte eine weiter entfernt liegende Fläche ausgewählt werden, ggf. auch mit einer weniger für den Fahrzeugtyp geeigneten Oberfläche als diejenige der nächstliegenden, nicht ausgewählten Fläche.

Gemäß einem Aspekt des Verfahrens wird zu jedem Straßenabschnitt eine Vielzahl von Datensätzen empfangen, wobei die Datensätze zu unterschiedlichen Zeitpunkten generiert wurden. Jeder Datensatz umfasst eine entsprechende Information, bspw. Wochentag, Uhrzeit, Datum. Diese Information kann dazu verwendet werden, eine Wahrscheinlichkeit zu bestimmen, mit der eine außerhalb des unmittelbaren Straßenraums liegende Fläche zu einem gegebenen Zeitpunkt für ein Minimal Risk Manoeuvre zur Verfügung steht.

Dieser Aspekt ermöglicht es bspw., eine Verfügbarkeit einer parallel neben einer Fahrbahn einer Straße verlaufenden Parkfläche zu einem bestimmten Zeitpunkt abzuschätzen. Eine Auswertung einer Vielzahl einen Straßenabschnitt betreffender Datensätze über einen längeren Zeitraum für unterschiedlichen Tageszeiten oder Wochentage kann beispielsweise ergeben, dass ein Parkstreifen an bestimmten Wochentagen zu bestimmten Tageszeiten üblicherweise nicht frei ist, während er zu anderen Tageszeiten oder an anderen Tagen, z.B. an Feiertagen, nicht oder nur wenig belegt ist. Eine Verknüpfung von Datumsangaben mit Feiertagen oder von Tageszeiten mit Öffnungszeiten von an diesem Straßenabschnitt gelegenen Geschäften oder Behörden kann dabei durch Abfrage entsprechender Datenbanken erfolgen.

Dieser Aspekt ermöglicht es aber auch, eine außerhalb des unmittelbaren Straßenraums liegende Fläche als geeignet zu kategorisieren, wenn dies durch eine einmalige Erfassung nicht sicher erfolgen kann. Beispielsweise kann ein dichter Bewuchs einer Fläche mit längeren Gräsern oder Getreide dazu führen, dass eine Fläche als nicht geeignet eingestuft wird. Durch die wiederkehrende Erfassung über ein ganzes Jahr kann dieselbe Fläche jedoch erneut zu einem Zeitpunkt erfasst werden, an dem kein oder nur ein niedriger Bewuchs vorhanden ist, z.B. wegen eines zwischenzeitlich erfolgten Mähens, und die eigentliche Oberfläche der Fläche für eine Kategorisierung erkennbar ist. Ein jahreszeitlich abhängiger Bewuchs, der ein Befahren der Fläche im Notfall nicht behindert, kann somit bei der Kategorisierung berücksichtigt werden. Selbstverständlich kann dies auch bei der Priorisierung berücksichtigt werden, wenn mehrere außerhalb des unmittelbaren Straßenraums liegende Flächen für ein bevorstehende Minimal Risk Manoeuvre zur Auswahl stehen. So ist es beispielsweise möglich, einen Flurschaden an landwirtschaftlich genutzten Flächen zu vermeiden, wenn eine andere geeignete Fläche in der Nähe erreichbar und genauso gut geeignet ist. Je mehr Datensätze zu unterschiedlichen Jahreszeiten für eine außerhalb des unmittelbaren Straßenraums liegende Fläche gesammelt werden, ggf. auch über mehrere Jahre hinweg, desto besser kann eine Eignung der Fläche zu einem bestimmten Zeitpunkt ermittelt werden.

Die in für digitale Straßenkarten geeigneten Formaten vorliegenden Informationen über Flächen außerhalb des unmittelbaren Straßenraums werden von der ersten Datenverarbeitungseinheit an autonome oder hochautomatisiert fahrende Fahrzeuge übermittelt. Diese Übermittlung kann über Mobilfunknetze, WLAN-Netze, Car-to-Car oder Car-to-Infrastruktur Netze oder dergleichen erfolgen.

Gemäß einem Aspekt des durch das System ausgeführten Verfahrens werden in der ersten Datenverarbeitungseinheit identifizierte Flächen manuell verifiziert, bspw. durch Besichtigung des Ortes, oder durch Vergleich mit Luft- oder Satellitenaufnahmen, bevor sie an autonom oder hochautomatisiert fahrende Fahrzeuge übermittelt werden dürfen.

Ein autonom oder hochautomatisiert fahrendes Fahrzeug empfängt Informationen bezüglich einer oder mehrerer erster Flächen innerhalb eines Radius um eine Geo-Position zu einem gegenwärtigen Zeitpunkt, entweder in Antwort auf eine Anfrage an das System oder im Zuge eines von dem System ausgelösten Push-Updates. Von einer in dem Fahrzeug angeordneten Navigationseinrichtung, einem eHorizon oder einem anderen geeigneten Fahrerassistenzsystem können die nunmehr zur Verfügung stehenden Informationen über Flächen außerhalb des unmittelbaren Straßenraums für ein bevorstehendes Minimum Risk Manoeuvre analysiert werden. Eine konkrete Auswahl einer Fläche kann außerdem von weiteren Faktoren abhängig sein, die durch lokal an oder in dem Fahrzeug angeordneten Sensoren erfasst oder aus digitalen Straßenkarten-Informationen bzw. e-Horizon-Informationen extrahiert werden. So ist es beispielsweise möglich, typische oder maximal zulässige Geschwindigkeiten auf einem Straßenabschnitt, eine gegenwärtige Sichtweite, eine gegenwärtige Verkehrsdichte in Fahrtrichtung und/oder des Gegenverkehrs und dergleichen zu berücksichtigen, und entsprechend zu entscheiden, auf der Straße zum Halten zu kommen. Ein Anhalten auf der Straße ist z.B. in städtischen Umgebungen häufig unproblematisch und einfacher als auf einer Autobahn, und kann grundsätzlich bevorzugt werden, schon allein um die Fahrt problemlos wieder fortsetzen zu können.

### Kurze Beschreibung der Zeichnung

Im Folgenden werden Aspekte der Erfindung mit Bezug auf die Zeichnung beschrieben. In der Zeichnung zeigt
- Fig. 1: ein beispielhaftes vereinfachtes Flussdiagramm Eines Aspekts des von dem System ausgeführten Verfahrens,
- Fig. 2: ein erstes beispielhaftes Blockdiagramm eines zur Durchführung zumindest von Teilen des Verfahrens geeigneten Systems,
- Fig. 3: ein zweites beispielhaftes Blockdiagramm eines zur Durchführung zumindest von Teilen des Verfahrens geeigneten Systems,
- Fig. 4: eine erste schematische Darstellung einer für MRM geeigneten Fläche,
- Fig. 5: eine zweite schematische Darstellung der für MRM geeigneten Fläche aus Figur 4 mit einem für eine gegebene Situation eingegrenzten Fahrbereich,
- Fig. 6: eine dritte schematische Darstellung einer für MRM geeigneten Fläche,
- Fig. 7a: eine vierte schematische Darstellung einer zeit weise für MRM geeigneten Fläche zu einem ersten Zeitpunkt, und
- Fig. 7b: eine schematische Darstellung der zeitweise für MRM geeigneten Fläche aus Figur 7a zu einem zweiten Zeitpunkt.

### Beschreibung der Ausführungsbeispiele

In den Figuren der Zeichnung sind gleiche oder ähnliche Elemente mit den gleichen Bezugszeichen bezeichnet.

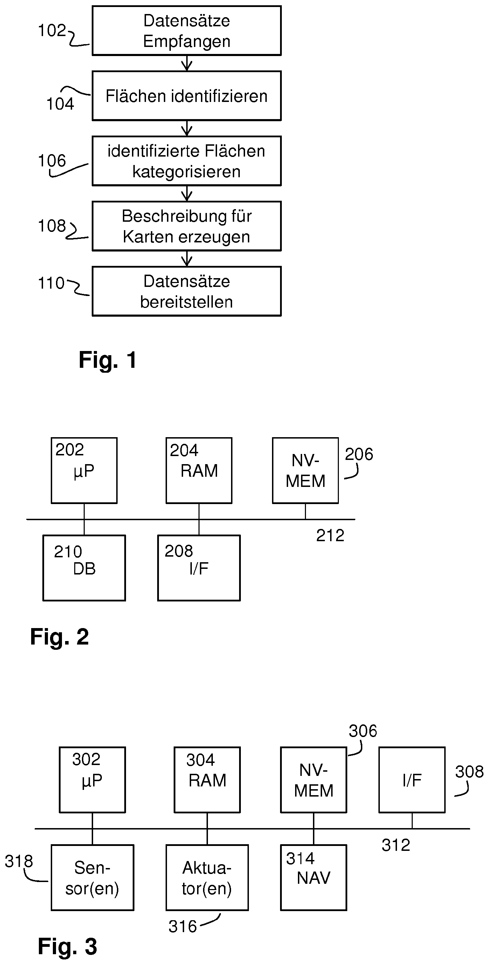

Figur 1 zeigt ein beispielhaftes vereinfachtes Flussdiagramm eines Aspekts des von dem System ausgeführten Verfahrens . Das Flussdiagramm kann dabei auch als Darstellung von Funktionsmodulen aufgefasst werden, wobei jedes Modul entsprechende Teile des Verfahrens ausführt. In Schritt oder Modul 102 werden Datensätze empfangen, welche Informationen zu Eigenschaften von Flächen außerhalb des unmittelbaren Straßenraums umfassen. In Schritt oder Modul 104 werden die Informationen einer Analyse unterworfen, um Flächen zu identifizieren, welche nach dem Verlassen einer Straße befahren werden können. In Schritt oder Modul 106 erfolgt eine Kategorisierung der identifizierten Flächen, z.B. nach einer Eignung für bestimmte Fahrzeugtypen. In Schritt oder Modul 108 wird für die identifizierten und ggf. kategorisierten Flächen eine Beschreibung in einem oder mehreren für digitale Straßenkarten geeigneten Format erzeugt, die in Schritt oder Modul 110 abrufbar bereitgestellt wird.

Figur 2 zeigt ein erstes beispielhaftes Blockdiagramm eines zur Durchführung zumindest von Teilen des Verfahrens geeigneten Systems. Mikroprozessor 202, RAM 204, nichtflüchtiger Speicher 206, Schnittstelle 208 und Datenbank 210 sind über ein oder mehrere Bussysteme 212 kommunikativ miteinander verbunden. Der nichtflüchtige Speicher 206 enthält Computer-Programmanweisungen die, wenn sie von dem Mikroprozessor 202 in Verbindung mit dem Arbeitsspeicher 204 und ggf. unter Zugriff auf weitere Systemkomponenten ausgeführt werden, zumindest Teile eines oder mehrerer Aspekte des erfindungsgemäßen Verfahrens ausführen.

Figur 3 zeigt ein zweites beispielhaftes Blockdiagramm eines zur Durchführung zumindest von Teilen des Verfahrens geeigneten Systems. Das beispielhaft dargestellte System kann in einem Fahrzeug angeordnet sein und mit Sensoren zur Erfassung von außerhalb des unmittelbaren Straßenraums liegenden Flächen ausgestattet sein, wobei zumindest ein Teil der durch das Gesamt-System durchgeführten Analyse durch in dem Fahrzeug angeordnete Datenverarbeitungseinheiten durchgeführt wird. Das beispielhaft dargestellte System kann auch Funktionen bereitstellen, die für autonomes oder hoch automatisiertes Fahren benötigt werden, z.B. eine Ansteuerung von Aktuatoren. Dazu umfasst das in Figur 2 dargestellte System einen Mikroprozessor 302, der mit RAM 304 und nichtflüchtigem Speicher 306 über ein oder mehrere Bussysteme 312 kommunikativ miteinander verbunden ist. Außerdem sind Schnittstelle 308, Sensoren 318 und Aktuatoren 316 über die ein oder mehreren Bussysteme 312 mit anderen Komponenten des Systems kommunikativ verbunden. Ein Navigationssystem 314 kann zur Bestimmung der Geo-Position des Fahrzeugs vorgesehen sein und ebenfalls über die ein oder mehreren Bussysteme 312 mit anderen Komponenten des Systems kommunikativ verbunden sein. Der nichtflüchtige Speicher 306 enthält Computer-Programmanweisungen die, wenn sie von dem Mikroprozessor 302 in Verbindung mit dem Arbeitsspeicher 304 und ggf. unter Zugriff auf weitere Systemkomponenten ausgeführt werden, zumindest Teile eines oder mehrerer Aspekte des erfindungsgemäßen Verfahrens ausführen.

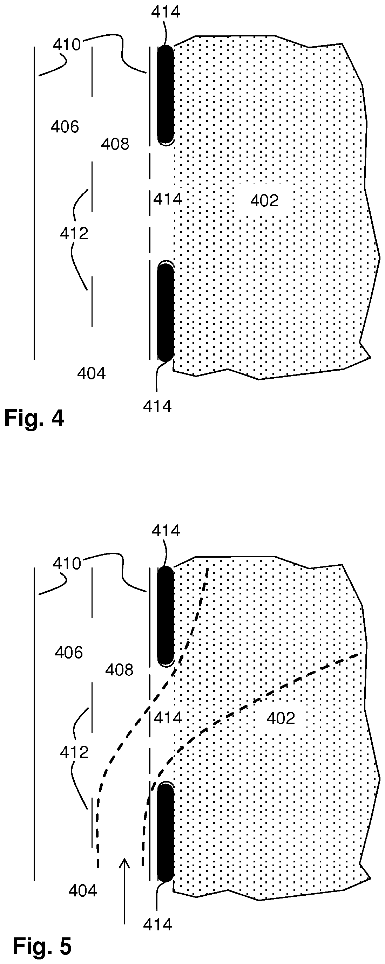

Figur 4 zeigt eine erste schematische Darstellung einer für MRM geeigneten Fläche 402. Die Fläche 402 liegt außerhalb des unmittelbaren Straßenraums einer Straße 404, die zwei Fahrbahnen 406 und 408 aufweist. Die Straße weist außerdem seitliche Begrenzungslinien 410 und eine durchbrochene Mittelline 412 auf. Die neben der Straße 402 liegende Fläche 402 ist durch einen Graben 414 von der Straße 402 getrennt, der von Fahrzeugen nicht durchfahren werden kann, z.B. wegen seiner Breite, Tiefe oder des Profilverlaufs. Der Graben 414 ist in einem Bereich 416 überbrückt. Eine derartige Überbrückung ist beispielsweise bei landwirtschaftlich genutzten Flächen bekannt, für die eine Zufahrt von der Straße vorgesehen ist. Die Fläche 402 ist durch ein oder mehrere Fahrzeuge erfasst worden und nach Analyse in einem erfindungsgemäßen System als für MRM geeignet eingestuft worden. Bei der Erfassung wurden auch der Beginn und das Ende des den Graben überbrückenden Bereichs 414 erfasst. Diese Erfassung erfolgte z.B. durch entsprechende Erkennung der in dem Bereich 414 unterbrochenen seitlichen Begrenzungslinie 410 oder durch Analyse eines diesen Bereich abbildenden Bildinhalts. Die Geo-Position der Fläche 402 und des Beginns und des Endes der Überbrückung sind entsprechend in Daten für eine digitale Straßenkarte enthalten und dadurch für ein bevorstehendes MRM vorab bekannt.

Figur 5 zeigt eine zweite schematische Darstellung der für MRM geeigneten Fläche aus Figur 4 mit einem für eine gegebene Situation eingegrenzten Fahrbereich. Die Darstellung entspricht derjenigen von Figur 4. Zusätzlich sei angenommen, dass ein in der Figur nicht gezeigtes Fahrzeug mit einer bestimmten Geschwindigkeit die Straße von unten kommend in Pfeilrichtung befährt. Die gestrichelten Linien 502 und 504 stellen einen für den Fahrzeugtyp und die gegenwärtige Geschwindigkeit des Fahrzeugs passenden Fahrkorridor dar, der von dem Fahrzeug gefahrlos im Falle eines nötig werdenden MRM genutzt werden könnte.

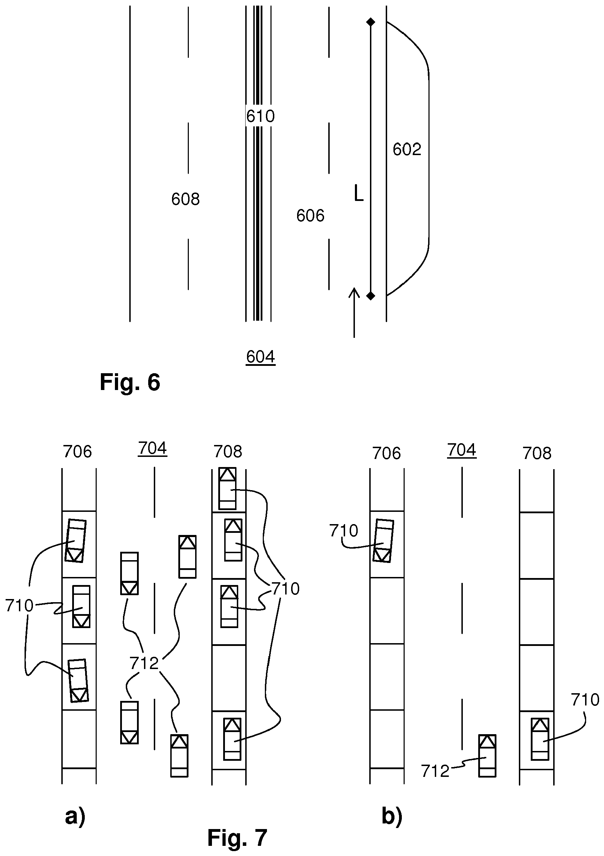

Figur 6 zeigt eine dritte schematische Darstellung einer für MRM geeigneten Fläche 602. Die Fläche 602 ist eine an einer Straße 604 mit zwei baulich getrennten Fahrbahnen 606, 608 mit jeweils zwei Fahrspuren gelegene Nothaltebucht. Wegen der baulichen Trennung 610 kann ein Ausweichmanöver eines in Richtung des Pfeils fahrenden Fahrzeugs (nicht gezeigt) nicht in den Bereich der Gegenfahrbahn erfolgen, was in Situationen, in denen kein Gegenverkehr herrscht, gefahrlos möglich wäre. Die Geo-Position der Nothaltebucht 602, insbesondere der Anfang und die Länge L, sind entsprechend in Daten für eine digitale Straßenkarte enthalten und dadurch für ein bevorstehendes MRM vorab bekannt. Wenn die Straße 604 nur temporär keinen Seitenstreifen aufweist, bspw. weil wegen einer Baustelle die vier Fahrspuren auf engerem Raum unter Nutzung des Seitenstreifens zusammengelegt wurden, ermöglicht das vorliegende System eine zeitnahe Erfassung und Kategorisierung der für ein MRM geeigneten Fläche 602 und ein entsprechendes Update der Informationen für digitale Straßenkarten.

Figur 7 zeigt eine vierte schematische Darstellung einer zeitweise für MRM geeigneten Fläche zu einem ersten Zeitpunkt. Die Figur zeigt eine zweispurige Straße 704 mit jeweils einer Fahrbahn für jede Richtung. Neben jeder Fahrbahn ist jeweils ein Parkstreifen 706, 708 mit einer Reihe von Parkplätzen angeordnet, die in Figur 7a zu einem großen Teil durch parkende Fahrzeuge 710 belegt sind. Zudem herrscht ein starker Autoverkehr, angedeutet durch die Fahrzeuge 712 auf der Straße 704. Die in Figur 7a gezeigte Situation könnte bspw. in einer Stadt zu üblichen Öffnungszeiten von Geschäften oder Behörden vorliegen, wobei die Parkplätze innerhalb kurzer Zeit frei und wieder neu belegt werden. Für MRM sind daher keine Flächen eindeutig bestimmbar, die über einen längeren Zeitraum gültig sind. Figur 7b zeigt dieselbe Straße 704 zu einem anderen Zeitpunkt, bspw. an einem Wochenende oder Feiertag, an dem keines der Geschäfte oder keine Behörde geöffnet sind. Es sind nur wenige Parkplätze durch parkende Fahrzeuge 710 belegt, und es herrscht auch kein starker Verkehr, angedeutet durch das einzelne Fahrzeug 712. Die Belegung der Parkplätze wird sich mit einer großen Wahrscheinlichkeit nicht innerhalb kürzerer Zeiträume ändern, so dass die zusammenhängend freien Parkplätze auf den Parkstreifen 706, 708 als mit entsprechender Wahrscheinlichkeit für ein MRM geeignet eingestuft werden können. Entsprechende Wahrscheinlichkeitswerte für eine gegebene Tageszeit und einen gegebenen Wochentag bzw. Feiertag können in den Informationen für digitale Straßenkarten enthalten sein oder zeitnah aktualisiert werden, so dass bspw. ein autonom fahrendes Fahrzeug, welches sich dem in der Figur gezeigten Straßenabschnitt nähert, vorab Informationen über eine in der Nähe befindliche, möglicherweise für ein MRM geeignete Fläche zur Verfügung hat.

Das vorstehend beschriebene System bzw. das Verfahren ermöglicht es, ein mit einem e-Horizon-System ausgestattetes oder ein autonom oder hochautomatisiert fahrendes Fahrzeug mit aktuellen Informationen über geeignete Flächen für Minimum Risk Manoeuvres zu versorgen. Dabei werden die den Informationen zugrunde liegenden Datensätze wiederholt durch eine Vielzahl von Fahrzeugen erneut erfasst, so dass die Verfügbarkeit immer wieder aufs Neue verifiziert wird und neue geeignete Flächen hinzugefügt bzw. nicht mehr zur Verfügung stehende Flächen entfernt werden. So ist zu jedem Zeitpunkt während der Fahrt bekannt, wie weit im Falle eines Minimum Risk Manoeuvres die maximal zurückzulegende Strecke ist, bis das Fahrzeug an einem sicheren Ort zum Stillstand gebracht werden kann. Falls die Strecke zu lang ist, kann die Kontrolle über das Fahrzeug an einen Fahrer zurückgegeben werden, der dann der Situation entsprechend entscheiden kann. Dadurch, dass die Geo-Positionen geeigneter Notfallflächen bereits vorab bekannt sind, kann auch bei Ausfall eines oder mehrerer Sensoren, die die für eine Ermittlung geeigneter Ausweichflächen in Echtzeit benötigten Informationen liefern, eine geeignete Ausweichfläche sicher bestimmt oder ausgewählt werden.

## Patentansprüche

1. System zur Erzeugung von Karteninformationen für einen oder mehrere Straßenabschnitte einer digitalen Straßenkarte, umfassend:
- eine Schnittstelle (208) zum Empfangen (102) von Datensätzen für den einen oder die mehreren Straßenabschnitte, wobei die Datensätze Eigenschaften von Flächen (402; 602) außerhalb des unmittelbaren Straßenraums (404; 604; 704) beschreiben,
- ein erstes Modul zum Auswerten (104) der empfangenen Datensätze, um erste Flächen außerhalb des unmittelbaren Straßenraums zu identifizieren, welche durch ein Fahrzeug nach dem Verlassen der Straße befahren werden können und auf welchen das Fahrzeug nach dem Verlassen der Straße zum Stillstand gebracht werden kann,
- ein zweites Modul zum Erzeugen (108) einer Beschreibung der ersten Flächen in einem für digitale Straßenkarten geeigneten Format,
- ein drittes Modul zum abrufbaren Bereitstellen (110) der Beschreibung der ersten Flächen in einem oder mehreren für digitale Straßenkarten geeigneten Format,
- wobei das System dazu eingerichtet ist, eine Vielzahl von Datensätzen zu jedem Straßenabschnitt zu empfangen, wobei die Vielzahl von Datensätzen zu unterschiedlichen Zeitpunkten erfasst bzw. erzeugt wurden, wobei jeder Datensatz eine Information zum Zeitpunkt der jeweiligen Erfassung bzw. Erzeugung umfasst, dadurch gejennzeichnet, dass das System dazu eingerichtet ist, durch Verwenden der Information zum Zeitpunkt für erste Flächen eine Wahrscheinlichkeit anzugeben, mit der sie zu einem gegebenen Zeitpunkt für ein Befahren im Zuge eines Minimal Risk Manoeuvre zur Verfügung stehen, und/oder aus unterschiedlichen Eigenschaften von ersten Flächen zu unterschiedlichen Zeiten während eines Jahres auf eine Eignung für ein Minimal Risk Manoeuvre zu schließen.

2. System nach Anspruch 1, außerdem umfassend ein viertes Modul zur Kategorisierung (106) der ersten Flächen in unterschiedliche Kategorien, wobei die Kategorisierung nach einem oder mehreren der in der folgenden Liste enthaltenen Kriterien erfolgt: eine Eignung der ersten Fläche für unterschiedliche Fahrzeugtypen, eine Beschaffenheit der Oberfläche der ersten Fläche, Witterungsbedingungen, für die die Beschaffenheit der Oberfläche gültig ist, eine Wahrscheinlichkeit und/oder Kosten für einen während des Befahrens der Fläche an der Fläche entstehenden Schaden.

3. System nach Anspruch 1, wobei das zweite Modul außerdem die Beschreibung der ersten Flächen um Informationen ergänzt, die Bereiche von Geschwindigkeiten und/oder Trajektorien repräsentieren, für die bzw. unter Einhaltung derer ein Befahren der Fläche möglich ist.

4. Verfahren zur Erzeugung von Karteninformationen für einen oder mehrere Straßenabschnitte einer digitalen Straßenkarte, umfassend:
- Empfangen (102) von Datensätzen für den einen oder die mehreren Straßenabschnitte, wobei die Datensätze Eigenschaften von Flächen (402; 602) außerhalb des unmittelbaren Straßenraums (404; 604; 704) beschreiben,
- Auswerten (104) der empfangenen Datensätze, um erste Flächen außerhalb des unmittelbaren Straßenraums zu identifizieren, welche durch ein Fahrzeug nach dem Verlassen der Straße befahren werden kann und auf welchem das Fahrzeug nach dem Verlassen der Straße zum Stillstand gebracht werden kann,
- Erzeugen (108) einer Beschreibung der ersten Flächen in einem für digitale Straßenkarten geeigneten Format,
- abrufbares Bereitstellen (110) der Beschreibung der ersten Flächen in einem oder mehreren für digitale Straßenkarten geeigneten Format,
- wobei eine Vielzahl von Datensätzen zu jedem bestimmten Straßenabschnitt empfangen wird, wobei die Vielzahl von Datensätzen zu unterschiedlichen Zeitpunkten erfasst bzw. erzeugt wurden, wobei jeder Datensatz eine Information zum Zeitpunkt der jeweiligen Erfassung bzw. Erzeugung umfasst, **dadurch gekennzeichnet, dass** durch Verwenden der Information zum Zeitpunkt für erste Flächen eine Wahrscheinlichkeit angegeben wird, mit der sie zu einem gegebenen Zeitpunkt für ein Befahren im Zuge eines Minimal Risk Manoeuvre zur Verfügung stehen und/oder aus unterschiedlichen Eigenschaften von ersten Flächen zu unterschiedlichen Zeiten während eines Jahres auf eine Eignung für ein Minimal Risk Manoeuvre geschlossen wird.

5. Verfahren nach Anspruch 4, außerdem umfassend:
- Kategorisierung (106) der ersten Flächen in unterschiedliche Kategorien, wobei die Kategorisierung nach einem oder mehreren der in der folgenden Liste enthaltenen Kriterien erfolgt: eine Eignung der ersten Fläche für unterschiedliche Fahrzeugtypen, eine Beschaffenheit der Oberfläche der ersten Fläche, Witterungsbedingungen, für die die Beschaffenheit der Oberfläche gültig ist, eine Wahrscheinlichkeit und/oder Kosten für einen während des Befahrens der Fläche an der Fläche entstehenden Schaden.

6. Verfahren nach Anspruch 4, außerdem umfassend:
- Ergänzen der Beschreibung der ersten Flächen um Informationen, die Bereiche von Geschwindigkeiten und/oder Trajektorien repräsentieren, für die bzw. unter Einhaltung derer ein Befahren der Fläche möglich ist.

7. Verfahren nach Anspruch 4, außerdem umfassend:
- Empfangen einer Anfrage bezüglich einer Verfügbarkeit einer oder mehrerer erster Flächen innerhalb eines Radius um eine Geo-Position zu einem gegenwärtigen Zeitpunkt, und
- Senden von aus jeweils einem zuletzt für die eine oder mehreren ersten Fläche empfangenen Datensatz extrahierten Informationen, die die Verfügbarkeit von Flächen innerhalb des Radius für ein Minimal Risk Manoeuvre repräsentieren.

8. Computerprogrammprodukt zur Erzeugung von Karteninformationen für einen oder mehrere Straßenabschnitte einer digitalen Straßenkarte, das auf einem computerlesbaren Medium gespeichert ist und Programminstruktionen umfasst welche, wenn sie durch einen Computer ausgeführt werden, die Schritte des Verfahrens nach einem der Ansprüche 4-7 ausführen.

## Claims

1. A system for generating map information for one or more road sections of a digital road map, comprising
- an interface (208) for receiving (102) data sets for the one or more road sections, wherein the data sets describe properties of areas (402; 602) outside the immediate road space (404; 604; 704)
- a first module for evaluating (104) the received data sets in order to identify first areas outside the immediate road space which can be driven over by a vehicle after leaving the road and on which the vehicle can be brought to a standstill after leaving the road,
- a second module for generating (108) a description of the first areas in a format suitable for digital road maps,
- a third module to provide (110) on demand the description of the first areas in one or more formats suitable for digital road maps,
- wherein the system is adapted to receive a plurality of data sets for each road section, said plurality of data sets having been acquired or generated at different times, each data set comprising information of the time of the respective acquisition or generation, **characterized in that** the system is adapted to indicate, by using the information of the time, for first areas a probability with which they are available for a minimal risk manoeuvre at a given time and/or to infer a suitability for a minimal risk manoeuvre from different properties of first areas at different times during a year.

2. The system according to claim 1, further comprising a fourth module for categorising (106) the first surfaces into different categories, the categorisation being made according to one or more of the criteria contained in the following list: a suitability of the first surface for different types of vehicles, a condition of the surface of the first surface, weather conditions for which the condition of the surface is valid, a probability and/or cost of damage to the surface during driving over the surface

3. The system according to claim 1, wherein the second module also supplements the description of the first surfaces with information representing ranges of speeds and/or trajectories for which or in compliance with which it is possible to travel on the surface.

4. A method for generating map information for one or more road sections of a digital road map, comprising:
- receiving (102) data sets for the one or the plurality of road sections, the data sets describing properties of areas (402; 602) outside the immediate road space (404; 604; 704),
- evaluating (104) the received data records to identify first areas outside the immediate road space which can be driven on by a vehicle after it has left the road and on which the vehicle can be brought to a standstill after leaving the road
- creating (108) a description of the first areas in a format suitable for digital road maps,
- providing (110) on demand the description of the first surfaces in one or more formats suitable for digital road maps,
- wherein a plurality of data sets is received for each specific road section, said plurality of data sets having been acquired or generated at different times, each data set comprising information of the time of the respective acquisition or generation, **characterized in that**, by using the information of the time, for first areas a probability is indicated with which they are available at a given time for driving with a minimal risk manoeuvre and/or a suitability for a minimal risk manoeuvre is concluded from different properties of first areas at different times during one year.

5. The method according to claim 4, further comprising:
- categorizing (106) the first areas into sub-areas of different categories, categorised according to one or more of the criteria contained in the following list: suitability of the first surface for different types of vehicles, the nature of the surface of the first surface, weather conditions for which the nature of the surface is valid, the probability and/or cost of damage to the surface during driving on the surface.

6. The method according to claim 4, further comprising:
- supplementing the description of the first areas with informations representing ranges of speeds and/or trajectories for which or in compliance with which it is possible to travel on the surface.

7. The method according to claim 4, further comprising:
- receiving a request for availability of one or more first surfaces within a radius around a geo-position to a current time, and
- sending information extracted from one last data set received for each of the one or more first surfaces, representing the availability of surfaces within the radius for a minimal risk manoeuvre.

8. A computer program product for generating map information for one or more road sections of a digital road map stored on a computer-readable medium and comprising program instructions which, when executed by a computer, perform the steps of the method according to any one of claims 4-7.

## Revendications

1. Un système pour générer des informations cartographiques pour un ou plusieurs tronçons de route d'une carte routière numérique, comprenant
- une interface (208) pour la réception (102) des ensembles de données pour un ou plusieurs tronçons de route, dans lesquels les ensembles de données décrivent les propriétés des zones (402; 602) en dehors de l'espace routier immédiat (404; 604; 704),
- un premier module d'évaluation (104) des ensembles de données reçus afin d'identifier les premières zones en dehors de l'espace routier immédiat sur lesquelles un véhicule peut rouler après avoir quitté la route et sur lesquelles le véhicule peut être immobilisé après avoir quitté la route,
- un deuxième module permettant de générer (108) une description des premières zones dans un format adapté aux cartes routières numériques,
- un troisième module permettant de fournir (110) à la demande la description des premières zones dans un ou plusieurs formats adaptés aux cartes routières numériques,
- sachant que le système est adapté pour recevoir une pluralité d'enregistrements de données pour chaque section de route, ladite pluralité d'enregistrements de données ayant été acquise ou générée à différents moments, chaque enregistrement de données comprenant des informations au moment de l'acquisition ou de la génération respective, **caractérisé en ce que** le système est adapté pour indiquer, en utilisant les informations au moment, pour des premières zones, une probabilité d'être disponible pour la conduite au cours d'une manoeuvre à risque minimal à un moment donné et/ou pour déduire une aptitude à une manoeuvre à risque minimal à partir de différentes propriétés de premières zones à différents moments pendant une année.

2. Le système de la revendication 1, comprenant en outre un quatrième module pour classer (106) les premières zones en différentes catégories, la catégorisation étant effectuée selon un ou plusieurs des critères contenus dans la liste suivante: une adéquation de la première zone pour différents types de véhicules, un état de la surface de la première zone, des conditions météorologiques pour lesquelles l'état de la surface est valable, une probabilité et/ou un coût des dommages à la zone pendant la conduite sur la zone.

3. Le système de la revendication 1, sachant que le deuxième module complète également la description des premières zones avec des informations représentant des gammes de vitesses et/ou de trajectoires pour lesquelles ou en conformité avec lesquelles il est possible de se déplacer sur la zone.

4. Un procédé de génération d'informations cartographiques pour un ou plusieurs tronçons de route d'une carte routière numérique, comprenant :
- recevoir (102) ensembles de données pour le ou la pluralité de tronçons de route, où les ensembles de données décrivent les propriétés des zones (402 ; 602) en dehors de l'espace routier immédiat (404 ; 604 ; 704),
- évaluer (104) les enregistrements de données reçus pour identifier les premières zones situées en dehors de l'espace routier immédiat qui peuvent être empruntées par un véhicule après qu'il a quitté la route et sur lesquelles le véhicule peut être immobilisé après avoir quitté la route,
- créer (108) une description des premières zones dans un format adapté aux cartes routières numériques,
- fournir (110) à la demande la description des premières zones dans un ou plusieurs formats adaptés aux cartes routières numériques,
- sachant qu' une pluralité d'ensembles de données est reçue pour chaque section de route particulière, ladite pluralité d'ensembles de données ayant été acquise ou générée à différents moments, chaque ensemble de données comprenant des informations au moment de l'acquisition ou de la génération respective, **caractérisé en ce qu'**en utilisant lesdites informations au moment pour les premières zones, une probabilité est indiquée avec laquelle elles sont disponibles pour la conduite au cours d'une manoeuvre à risque minimal à un moment donné et/ou une aptitude à une manoeuvre à risque minimal est conclue à partir de différentes propriétés des premières zones à différents moments pendant une année.

5. Le procédé de la revendication 4, comprenant en outre:
- classer (106) les premières zones en différentes catégories, classées selon un ou plusieurs des critères contenus dans la liste suivante: adéquation de la première zone à différents types de véhicules, nature de la surface de la première zone, conditions météorologiques pour lesquelles la nature de la surface est valable, probabilité et/ou un coût des dommages causés à la zone pendant la conduite sur la zone.

6. Le procédé de la revendication 4, comprenant en outre:
- compléter la description des premières zones par avec des informations représentant des gammes de vitesses et/ou de trajectoires pour lesquelles ou selon lesquelles pour lesquelles ou en conformité avec lesquelles il est possible de se déplacer sur la zone.

7. Le procédé de la revendication 4, comprenant en outre:
- recevoir une demande de disponibilité d' une ou des plusieurs premières zones dans un rayon autour d'une géo-position par rapport à un courant le temps, et
- envoyer d'informations extraites d'un ensemble de données reçu le plus récemment pour une ou plusieurs premières zones, représentant la disponibilité des zones dans le rayon pour une manœuvre à risque minimal.

8. Produit de programme informatique pour générer des informations cartographiques pour un ou plusieurs tronçons de route d'une carte routière numérique stockée sur un support lisible par ordinateur et comprenant des instructions de programme qui, lorsqu'elles sont exécutées par un ordinateur, exécutent les étapes du procédé selon l'une quelconque des revendications 4-7.
